# FASCICULE DE BREVET EUROPEEN

(11) **EP 0 263 770 B1**
(45) Date de publication et mention de la délivrance du brevet: **03.02.1993**
(21) Numéro de dépôt: 87440062.5
(22) Date de dépôt: 09.10.1987
(51) Int. Cl.: B28B 23/00, B28B 13/02, B29C 67/24

(54) **Procédé de fabrication de panneaux de revêtement de grandes dimensions et dispositif pour la mise en oeuvre de ce procédé**
Verfahren zum Herstellen von Grossformatigen Verblendungsplatten und Vorrichtung zum Durchführen des Verfahrens
Method for making large-size facing panels, and device for performing the method

(30) Priorité: 10.10.1986 FR 8614218
(43) Date de publication de la demande: 13.04.1988
(73) Titulaire: SOMOCLEST, S.A., F-90150 Fontaine (FR)
(72) Inventeur: Caruso, Philippe, F-90150 Fontaine (FR)
(74) Mandataire: Nuss, Pierre

(56) Documents cités:
- DE-A- 2 355 981
- DE-A- 2 651 472
- FR-A- 2 065 238
- FR-A- 2 263 086
- GB-A- 2 003 461
- US-A- 1 623 625
- US-A- 4 504 335

## Description

La présente invention concerne le domaine du bâtiment, en particulier du bâtiment industrialisé à ossature bois ou métal, dont les murs sont munis d'un revêtement ou d'un bardage.

Actuellement, les revêtements de façades, en particulier de façades préfabriquées sont réalisés, soit sous forme de panneaux de béton formant partie intégrante du mur, soit sous forme de bardages en plaques de fibro-ciment, de polyester, soit encore sous forme de bardages en bois ou en carreaux de céramique.

Les panneaux de mur présentant une face extérieure en béton sont, cependant, très lourds et difficiles à mettre en oeuvre et offrent peu de possibilités de variations esthétiques, de formes ou de couleurs.

Le bardage en bois ne peut être mis en oeuvre que de manière artisanale et nécessite un entretien constant.

Les revêtements généralement formés par des plaques de petites dimensions sont appliqués après mise en place d'une ossature porteuse, les plaques ne pouvant être intégrées directement à l'ossature lors de la fabrication.

Enfin, les bardages réalisés en carreaux de céramique, qui sont également appliqués après érection des murs, sont d'un prix de revient très élevé, nécessitent des éléments de fixation très chers, et posent des problèmes de jointoiement.

La présente invention a pour but de pallier ces inconvénients.

On connaît également, par GB-A-2 003 461 un procédé de préparation d'un mortier synthétique pour l'application par projection, ce mortier pouvant être muni de charges très fines.

De même, DE-A-2 355 981 décrit un dispositif pour la réalisation de plaques présentant un creux et constituées en un matériau synthétique. Ce dispositif est, en fait un dispositif de moulage muni d'un éjecteur des pièces moulées et ne met en oeuvre aucun élément extérieur d'infrastructure.

Par ailleurs, US-A-4 504 335 a pour objet un procédé de réalisation en continu de plaques de ciment renforcées par des tissus d'armature, le ciment étant répandu entre les tissus et l'ensemble étant calibré au moyen d'un rouleau sur la table de déversement du ciment.

Ces différents documents ne permettent pas de définir un procédé de fabrication de panneaux de grandes dimensions pourvus d'une infrastructure porteuse.

La présente invention a pur but de pallier ces inconvénients.

Elle a, en effet, pour objet un procédé de fabrication de panneaux de revêtement, dans lequel un béton polymère sous forme d'un mélange à base de méthacrylate de méthyle avec des charges est réalisé au moyen d'un malaxeur, caractérisé en ce qu'il consiste à étaler le béton au moyen d'une trémie d'épandage mobile et d'une règle vibrante dans un moule, dans lequel est déroulé simultanément un film en fibres de verre, sur une épaisseur régulière, puis à appliquer sur le mélange étalé une infrastructure porteuse au moyen d'un conformateur, ladite infrastructure étant scellée dans le mélange après polymérisation, pour former un panneau rigide, qui est basculé hors du moule au moyen du conformateur, puis évacué sur une aire de stockage.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
la figure 1 est une vue en plan d'un dispositif pour la mise en oeuvre du procédé conforme à l'invention ;
la figure 2 est une vue en élévation latérale suivant la figure 1 ;
la figure 3 est une vue en coupe suivant A-A de la figure 1, et
la figure 4 est une vue analogue à celle de la figure 3, légèrement agrandie, représentant la mise en place d'une infrastructure porteuse.

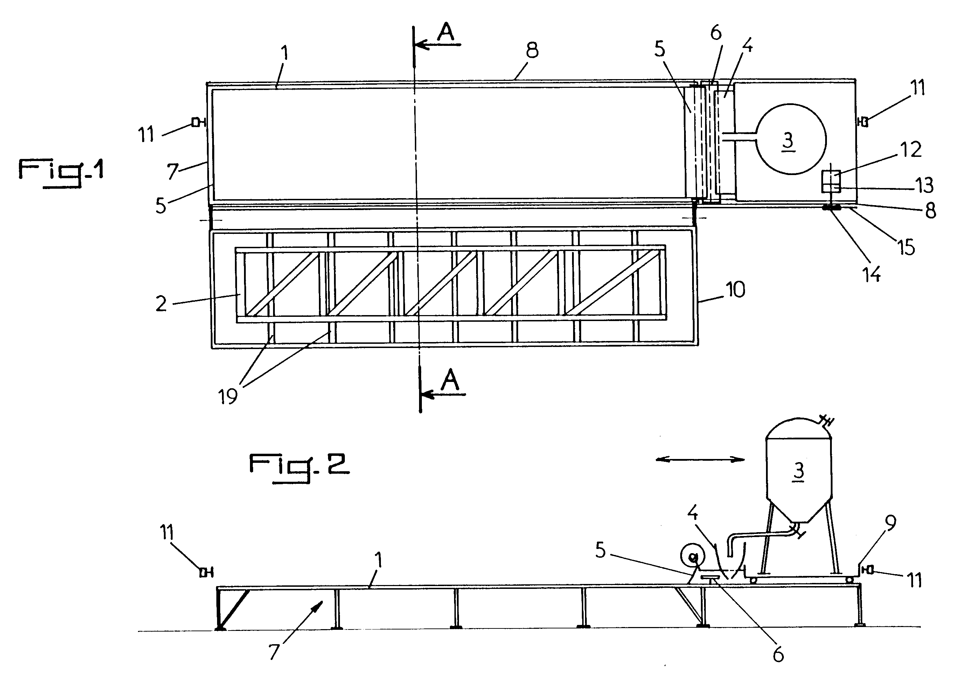

Conformément à l'invention, et comme le montrent les figures 1 à 4 des dessins annexés, le procédé de fabrication de panneaux de revêtement consiste à réaliser un béton polymère sous forme d'un mélange à base de méthacrylate de méthyle avec des charges et à l'étaler dans un moule 1 sur une épaisseur régulière, un film en fibres de verre 5 étant déroulé simultanément dans le moule 1, puis à appliquer sur le mélange étalé une infrastructure porteuse qui y sera scellée après polymérisation du mélange.

Selon l'invention, le procédé consiste à peser les charges et la résine, à introduire les charges dans un malaxeur 3 et à les mélanger pendant environ 5 minutes jusqu'à homogénéisation, à ajouter alors la résine et à poursuivre le mélange pendant environ 2 minutes, à déverser le béton polymère obtenu dans une trémie d'épandage 4, puis à déplacer la trémie 4 au-dessus d'un moule 1, à une hauteur prédéterminée, et à épandre le béton polymère, un film en fibres de verres 5 étant déroulé simultanément dans le moule 1, à étaler le béton polymère de manière régulière au moyen d'une règle vibrante 6, puis à appliquer sur le béton polymère ainsi étalé et armé une infrastructure porteuse 2 munie sur sa face tournée vers le béton polymère de crochets d'accrochage qui s'ancrent dans le béton polymère après une polymérisation de ce dernier pendant environ 30 à 45 minutes, à une température comprise entre 20°C et 35°C, pour former un panneau rigide, à soulever ensuite, par basculement, l'ensemble infrastructure et panneau obtenu hors du moule 1, à ébavurer les bords du panneau, et à évacuer l'ensemble sur une aire de stockage.

Le béton polymère présente avantageusement la composition suivante :
méthacrylate de méthyle 10 % à 15 % en poids charges telles que silice, quartz de diverses granulométries, poudre d'ardoise, brique en poudre, etc... 85 % à 90 % en poids
Les charges utilisées permettent de réaliser aisément une coloration naturelle dans la masse du béton polymère.
le méthacrylate de méthyle permet l'obtention de bonnes qualités mécaniques, à savoir une résistance à la traction de l'ordre de 200 bars, ainsi qu'un collage parfait sur l'infrastructure et une bonne étanchéité à l'eau.

L'invention a également pour objet un dispositif pour la mise en oeuvre du procédé décrit ci-dessus, caractérisé en ce qu'il est essentiellement constitué par une table 7 de support d'un moule 1 munie le long de ses bords longitudinaux de rails de guidage 8, par un malaxeur 3 monté sur les rails 8, au moyen d'un châssis roulant 9 sur lequel sont montées une trémie d'épandage 4 et une règle vibrante 6, et par un conformateur 10 de réception de l'infrastructure 2 monté à pivotement le long d'un bord longitudinal de la table 7.

La table 7 se présente sous forme de châssis très rigide et est subdivisée en deux parties, à savoir une partie recevant le moule 1 et une partie prolongeant la première et supportant le châssis roulant 9 du malaxeur 3 en position de repos de ce dernier, et est munie à ses extrémités de contacts de fin de course 11 de commande d'un moteur 12 de déplacement du châssis 9.

Le châssis de la table 7 doit présenter une bonne rigidité afin de pouvoir assurer une planéité parfaite des panneaux à réaliser.

Le moule 1 est formé par un évidement de la partie correspondante de la table 7 et par un film amovible, recouvrant le fond de cet évidement, constitué en polyéthylène et présentant un aspect de surface. Ainsi, il est possible de réaliser une finition de surface en crépis, en briques, de toiture, ou autre, par simple mise en place d'un film présentant l'aspect désiré avant la fabrication du panneau.

Le moteur 12 de déplacement du châssis 9 entraîne ce dernier par l'intermédiaire d'un réducteur 13 dont l'arbre de sortie porte un pignon 14 engrenant avec une crémaillère 15 fixée le long d'un rail 8 de la table 7 (figure 1).

Le conformateur 10 est relié à pivotement à des bras 16 de la table 7 au moyen de bras 17, est muni sur son bord libre de pieds 18 de mise à niveau avec la table 7, et se présente sous forme d'un cadre rigide présentant à intervalles réguliers des traverses 19 de raidissement et de montage des éléments de maintien de l'infrastructure 2. Ainsi, il est possible de fixer tous types d'infrastructures sur le conformateur 10, les traverses 19 permettant le montage d'éléments de serrage pour tous les composants structuraux de ladite infrastructure, à savoir les ossatures, les encadrements de fenêtres ou de portes, ce tant pour les panneaux de façade, de pignon, ou de toit.

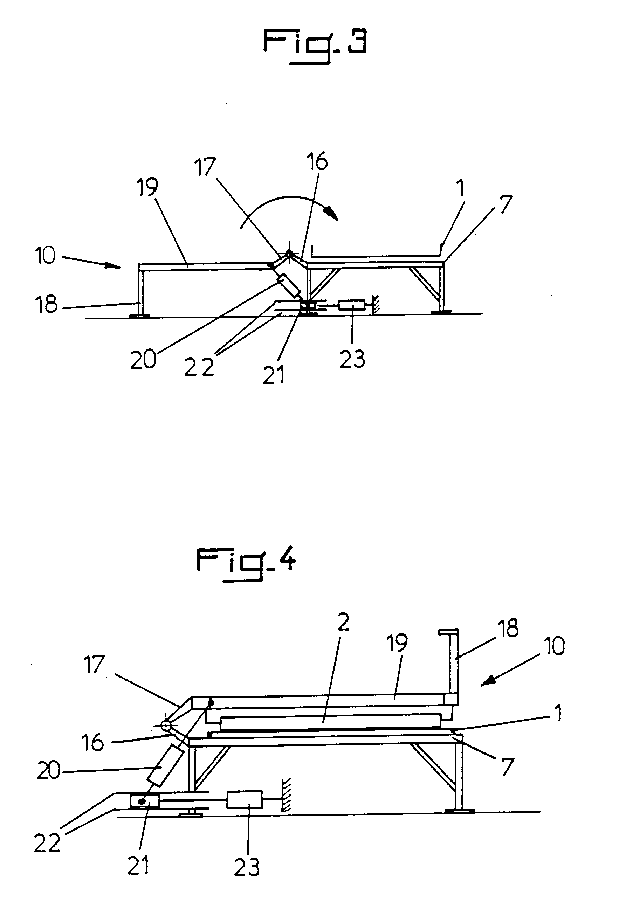

Le pivotement du conformateur 10 pour amener l'infrastructure 2 sur la table 7 est réalisé au moyen d'un dispositif de pivotement constitué par des paires de vérins agissant sur les traverses 19 du conformateur et s'appuyant sur les pieds de la table 7 et comportant chacune un premier vérin 20 dont la tige est articulée sur la traverse 19 correspondante et dont la chape est montée à pivotement sur un coulisseau 21 guidé en déplacement horizontal dans des rails 22 solidaires du pied correspondant de la table 7, et un second vérin 23 dont la tige de piston agit sur le coulisseau 21 et dont la chape est solidarisée avec le châssis de la table 7 (figure 3). Ainsi, pour le pivotement du conformateur 10, à partir de la position représentée à la figure 3, les vérins 20 sont mis sous pression afin de réaliser un pivotement vers le haut du conformateur 10 autour des paliers des bras 16 au moyen des bras 17 jusqu'à ce que les extrémités des vérins 20 soient alignées avec l'axe des paliers des bras 16 et 17. Dans cette position, le conformateur 10 est sensiblement à la verticale et doit subir un pivotement complémentaire en direction de la table 7. A cet effet, les vérins 23 sont actionnés dans le sens d'un déplacement des coulisseaux correspondant 21 vers l'extérieur de la table 7, les vérins 20 étant simultanément branchés à l'échappement à travers un étranglement important, de sorte que les vérins 20 ne sont plus en alignement avec les paliers des bras 16 et 17 et peuvent de nouveau être actionnés pour amener le conformateur 10 dans sa position de basculement automatique correspondant sensiblement à un nouvel alignement des vérins 20 avec l'axe des paliers des bras 16 et 17. Les vérins 20 sont alors branchés sur l'échappement avec étranglement afin de réaliser le retrait de leur tige et donc le pivotement final du conformateur 10 avec l'infrastructure 2 sur le béton polymère contenu dans le moule 1 de la table 7, les vérins 20 maintenant le conformateur 10 avec l'infrastructure 2 parfaitement à l'horizontale après introduction de la partie correspondante de l'infrastructure, d'une profondeur prédéterminée, sans le béton polymère (figure 4).

L'application du conformateur à l'horizontale au-dessus de la table 7 est avantageusement détectée par des contacts de fin de course non(représentés) solidaires de ladite table 7 et commandant le blocage des vérins 20.

Après polymérisation du béton polymère, le conformateur 10 est ramené, dans un premier temps, en position verticale en vue de l'évacuation du panneau obtenu vers un lieu de stockage, puis est basculé à sa position de départ à l'horizontale, ces mouvements étant réalisés par les paires de vérins 20 et 23 de manière inverse à celle décrite plus haut.

Le malaxeur 3 peut être un simple malaxeur usuel fixé sur le châssis roulant 9, sur lequel la règle vibrante 6 est montée de manière connue en soi, réglable en hauteur, et entraînée par un moteur non représenté. La trémie d'épandage 4 est également du type connu et est avantageusement munie d'un hérisson ou d'une vis de répartition entraînée, par exemple, par le moteur d'actionnement de la règle vibrante 6.

Le dispositif conforme à l'invention fonctionne de la manière suivante :
Après pesage et mélange des charges,puis addition du méthacrylate de méthyle, le châssis roulant est déplacé, au moyen du moteur 12 du réducteur 13, du pignon 14 et de la crémaillère 15, de sa position de repos vers l'extrémité opposée de la table 9, où sa position est détectée par un contact de fin de coursell qui provoque l'arrêt du moteur 12. Ce contact provoque également, au moyen d'un dispositif de contrôle de temps l'inversion du réducteur 13 et le rédémarrage du moteur 12, après écoulement du temps de mélange des produits nécessaire et après remplissage de la trémie d'épandage 4. Le châssis 9 est alors déplacé en sens contraire, et le mélange de béton polymère est étalé suivant une épaisseur prédéterminée au moyen de la règle vibrante 6. Lors de l'arrivée en fin de course du châssis 9 avant épandage, un film en fibres de verre 5 est fixé à l'extrémité correspondante de la table 7 de manière à être déroulé dans le moule 1 simultanément avec l'épandage du béton polymère. Lorsque le châssis 9 arrive en fin de course d'épandage, il appuie sur un deuxième contact de fin de course 11 qui provoque l'arrêt du moteur 12 ainsi que de la règle vibrante 6 et la fermeture de la trémie 4.

Le conformateur 10 avec l'infrastructure 2 est alors déposé sur le béton polymère en cours de polymérisation de la manière décrite plus haut.

Grâce à l'invention, il est possible de réaliser des panneaux de construction de grande taille pouvant correspondre à des façades entières, à des toits, ou à des pignons, et qui sont réalisables très rapidement. En outre, de tels panneaux peuvent facilement être mis en oeuvre sur chantier et permettent de réduire les joints, généralement peu esthétiques et délicats à réaliser, à un minimum.

Le procédé et le dispositif conformes à l'invention permettent, par ailleurs, éventuellement une production de panneaux directement sur leur lieu d'utilisation,de sorte que leur coût de transport serait très minime.

Le panneau selon l'invention peut facilement être coloré dans la masse et du fait de son infrastructure porteuse, il permet diverses possibilités de ventilation et d'isolation.

## Revendications

1. Procédé de fabrication de panneaux de revêtement, dans lequel un béton polymère sous forme d'un mélange à base de méthacrylate de méthyle avec des charges est réalisé au moyen d'un malaxeur (3) , caractérise en ce qu'il consiste à étaler le béton au moyen d'une trémie d'épandage mobile (4) et d'une règle vibrante (6) dans un moule (1), dans lequel est déroulé simultanément un film en fibres de verre (5), sur une épaisseur régulière, puis à appliquer sur le mélange étalé une infrastructure porteuse (2) au moyen d'un conformateur (10), ladite infrastructure étant scellée dans le mélange après polymérisation, pour former un panneau rigide, qui est basculé hors du moule au moyen du conformateur (10), puis évacué sur une aire de stockage.

2. Procédé, suivant la revendication 1, caractérisé en ce qu'il consiste à peser les charges et la résine, à introduire les charges dans un malaxeur (3) et à les mélanger pendant environ 5 minutes jusqu'à homogénéisation, à ajouter alors la résine et à poursuivre le mélange pendant environ 2 minutes, a déverser le béton polymère obtenu dans une trémie d'épandage (4), puis à déplacer la trémie (4) au-dessus d'un moule (1), à une hauteur prédéterminée, et à épandre le béton polymère dans ledit moule (1), dont le fond présente un aspect de surface, un film en fibres de verre (5) étant déroulé simultanément dans le moule (1), à étaler le béton polymère de manière régulière au moyen d'une règle vibrante (6), puis à appliquer sur le béton polymère ainsi étalé et armé une infrastructure porteuse (2) munie sur sa face tournée vers le béton polymère de crochets d'accrochage qui s'ancrent dans le béton polymère après une polymérisation de ce dernier pendant environ 30 à 45 minutes, à une température comprise entre 20°C et 35°C, pour former un panneau rigide, à soulever ensuite, par basculement, l'ensemble infrastructure et panneau obtenu hors du moule (1), à ébavurer les bords du panneau, et à évacuer l'ensemble sur une aire de stockage.

3. Procédé, suivant l'une quelconque des revendications 1 et 2, caractérisé en ce que le béton polymère présente avantageusement la composition suivante :
méthacrylate de méthyle 10 % à 15 % en poids
charges telles que silice, quartz de diverses granulométries, poudre d'ardoise, brique en poudre, etc...
85 % à 90 % en poids

4. Dispositif pour la mise en oeuvre du procédé suivant l'une quelconque des revendications 1 et 2, essentiellement constitué par une table (7) de support d'un moule (1), se présentant sous forme de châssis très rigide et munie le long de ses bords longitudinaux de rails de guidage (8), et par un malaxeur (3) monté sur les rails (8) au moyen d'un châssis roulant (9), sur lequel sont montées une trémie d'épandage (4) et une règle vibrante (6), un moteur (12) de déplacement du châssis (9) entraînant ce dernier par l'intermédiaire d'un réducteur (13) dont l'arbre de sortie porte un pignon (14) engrenant avec une crémaillère (15) fixée le long d'un rail (8) de la table (7), caractérisé en ce qu'il comporte un conformateur (10) de réception de l'infrastructure (2) monté à pivotement le long d'un bord longitudinal de la table (7), qui est subdivisée en deux parties, à savoir une partie recevant le moule (1) et une partie prolongeant la première et supportant le châssis roulant (9) du malaxeur (3) en position de repos de ce dernier, et est munie à ses extrémités de contacts de fin de course (11) de commande du moteur (12) de déplacement du châssis (9) et en ce que le moule (1) est formé par un évidement de la partie correspondante de la table (7) et par un film amovible, recouvrant le fond de cet évidement, constitué en polyéthylène et présentant un aspect de surface.

5. Dispositif, suivant la revendication 4, caractérisé en ce que le conformateur (10) est relié à pivotement à des bras (16) de la table (7) au moyen de bras (17) et muni sur son bord libre de pieds (18) de mise à niveau avec la table (7), et se présente sous forme d'un cadre rigide présentant à intervalles réguliers des traverses (19) de raidissement et de montage des éléments de maintien de l'infrastructure (2), en ce que le pivotement du conformateur (10) pour amener l'infrastructure (2) sur la table (7) est réalisé au moyen d'un dispositif de pivotement constitué par des paires de vérins agissant sur les traverses (19) du conformateur et s'appuyant sur les pieds de la table (7) et comportant chacune un premier vérin (20), dont la tige est articulée sur la traverse (19) corespondante et dont la chape est montée à pivotement sur un coulisseau (21) guidé en déplacement horizontal dans des rails (22) solidaire du pied correspondant de la table (7), et un second vérin (23), dont la tige de piston agit sur le coulisseau (21) et dont la chape est solidarisée avec le châssis de la table (7) et en ce que l'application du conformateur à l'horizontale au-dessus de la table (7) est avantageusement détectée par des contacts de fin de course solidaires de ladite table (7) et commandant le blocage des vérins (20).

## Claims

1. Method for manufacturing facing panels, wherein a polymer concrete in the form of a mixture based on methyl methacrylate with fillers is produced by means of a mixer (3), characterised in that it consists in spreading the concrete by means of a mobile spreading hopper (4) and a vibrating beam (6) in a mould (1), in which there is simultaneously unrolled a film of glass fibres (5), at a uniform thickness, then applying to the spread out mixture by means of a support (10) a supporting infrastructure (2), the said infrastructure being sealed in the mixture after polymerisation, to form a rigid panel, which is tipped out of the mould by means of the support (10), then discharged to a storage area.

2. Method according to Claim 1, characterised in that it consists in weighing the fillers and the resin, introducing the fillers into a mixer (3) and mixing them for approximately 5 minutes until uniformly blended, then adding the resin and continuing mixing for approximately 2 minutes, pouring out the polymer concrete obtained into a spreading hopper (4), then moving the hopper (4) above a mould (1), at a predetermined height, and spreading the polymer concrete in the said mould (1), the bottom of which has a surface appearance, a film of glass fibres (5) being simultaneously unrolled in the mould (1), spreading the polymer concrete uniformly by means of a vibrating beam (6), then applying to the spread out and reinforced polymer concrete a supporting infrastructure (2) provided, on the face turned towards the polymer concrete, with anchorage hooks which anchor themselves in the polymer concrete after polymerisation of the latter for approximately 30 to 45 minutes, at a temperature ranging between 20°C and 35°C, to form a rigid panel then, by tilting, raising the assembly of infrastructure and panel obtained, out of the mould (1), deflashing the edges of the panel, and discharging the whole to a storage area.

3. Method according to either of Claims 1 and 2, characterised in that the polymer concrete advantageously has the following composition:
methyl methacrylate 10% to 15% by weight
fillers such as silica, quartz of various grain sizes, powdered slate, powdered brick, etc.. 85% to 90% by weight.

4. Device for the implementation of the method according to either of Claims 1 and 2, consisting essentially of a support table (7) for a mould (1), being in the form of a very rigid framework provided along its longitudinal edges with guide rails (8), and of a mixer (3) mounted on the rails (8) by means of a travelling chassis (9), on which are mounted a spreading hopper (4) and a vibrating beam (6), a motor (12) for the movement of the chassis (9) driving the latter by way of a reduction gear (13), the output shaft of which carries a pinion (14) meshing with a rack (15) fixed along a rail (8) of the table (7), characterised in that it has a support (10) for receiving the infrastructure (2), pivotably mounted along a longitudinal edge of the table (7), which table is subdivided into two parts, that is to say, a part receiving the mould (1) and a part extending the first and supporting the travelling chassis (9) of the mixer (3) in the rest position of the latter, and is provided at its ends with limit stop contacts (11) controlling the motor (12) for the movement of the chassis (9), and in that the mould (1) is formed by a recess in the corresponding part of the table (7) and by a removable film, covering the bottom of this recess, consisting of polyethylene and having a surface appearance.

5. Device according to Claim 4, characterised in that the support (10) is pivotably connected to arms (16) of the table (7) by means of arms (17) and provided on its free edge with feet (18) for levelling with the table (7), and is in the form of a rigid frame having at regular intervals cross-members (19) for stiffening and for mounting the retaining elements for the infrastructure (2), in that the pivoting of the support (10) to bring the infrastructure (2) onto the table (7) is effected by means of a pivot device consisting of pairs of jacks acting on the cross-members (19) of the support and bearing on the feet of the table (7) and each having a first jack (20), the rod of which is articulated on the corresponding cross-member (19) and the base of which is pivotably mounted on a slide block (21) guided so as to move horizontally in rails (22), rigidly connected to the corresponding foot of the table (7), and a second jack (23), the piston rod of which acts on the slide block (21) and the base of which is rigidly fixed to the framework of the table (7), and in that the application of the support horizontally above the table (7) is advantageously detected by limit stop contacts rigidly fixed to the said table (7) and controlling the locking of the jacks (20).

## Patentansprüche

1. Verfahren zum Herstellen von Verblendungsplatten, bei welchem ein Polymerbeton in Form eines Gemisches auf Methylmethacrylatbasis mit Füllstoffen unter Verwendung eines Mischapparates (3) hergestellt wird, dadurch gekennzeichnet, daß der Beton unter Verwendung eines beweglichen Verteiltrichters (4) und einer Vibrationsleiste (6) in einer Form (1), in welcher gleichzeitig eine Glasfaserschicht (5) abgerollt wird, in gleichmäßiger Dicke verteilt wird, dann auf die verteilte Mischung eine tragende Unterstruktur (2) unter Verwendung einer Transfereinrichtung (10) gelegt wird, wobei die Unterstruktur in dem Gemisch nach deren Polymerisation eingesiegelt ist, um so eine starre Platte zu bilden, die dann unter Verwendung der Transfereinrichtung (10) aus der Form herausgekippt wird und dann in einen Lagerbereich gefördert wird.

2. Verfahren nach Anspruch 1, dadurch gekennzeichnet, daß die Füllstoffe und das Harz gewogen werden, daß die Füllstoffe in den Mischapparat (3) hineingegeben werden und ungefähr fünf Minuten lang gemischt werden, bis eine Homogenisierung erreicht worden ist, daß dann das Harz hinzugeführt wird und das Mischen etwa zwei Minuten lang fortgesetzt wird, daß der so erhaltene Polymerbeton in einen Verteiltrichter (4) geleert wird, daß dann der Verteiltrichter (4) über einer Form (1) in vorgegebener Höhe hinwegbewegt wird und der Polymerbeton in dieser Form (1) verteilt wird, deren Boden eine Oberflächenkonturierung aufweist, wobei eine Glasfaserschicht (5) gleichzeitig in der Form (1) abgerollt wird, daß der Polymerbeton gleichförmig unter Verwendung einer Vibrationsleiste (6) verteilt wird, daß dann auf dem so verteilten und mit einer Armierung versehenen Polymerbeton eine tragende Unterstruktur (2) angeordnet wird, die auf ihrer dem Polymerbeton zugewandten Fläche Verankerungshaken aufweist, die sich in dem Polymerbeton nach einer Polymerisation des letzteren, die innerhalb von etwa 30-45 Minuten bei einer Temperatur zwischen 20° C und 35° C erfolgt, verankern, wodurch eine starre Platte erhalten wird, daß anschließend durch Verschwenken die Einheit, die durch die Unterstruktur und die Platte gebildet wird, aus der Form (1) herausbewegt wird, daß Grate an den Rändern der Platte entfernt werden und daß die Einheit zu einem Lagerbereich wegbewegt wird.

3. Verfahren nach einem der Ansprüche 1 und 2, dadurch gekennzeichnet, daß der Polymerbeton vorzugsweise die nachstehende Zusammensetzung aufweist: Methylacrylat 10-15 Gew.%; Füllstoffe wie Kieselerde, Quarz unterschiedlicher Körnung, Schieferpulver, Backsteinpulver usw. 85-90 Gew.%.

4. Vorrichten zum Durchführen des Verfahrens nach einem der Ansprüche 1 und 2, welche im wesentlichen aufweist: einen Tragtisch (7) für eine Form (1), der einen sehr steifer Rahmen aufweist und längs seiner Längsränder Führungsschienen (8) hat, und einen Mischapparat (3), der mittels eines Fahrgestelles (9), auf welchem ein Verteiltrichter (4) und eine Vibrationsleiste (6) angeordnet sind, auf den Schienen (8) angeordnet ist, wobei ein Motor (12) zum Verlagern des Fahrgestelles (9) letzteres über ein Untersetzergetriebe (13) antreibt, dessen Abtriebswelle ein Ritzel (14) trägt, das mit einer Zahnstange (15) kämmt, die längs einer Führungsschiene (8) des Tragtisches (7) befestigt ist, dadurch gekennzeichnet, daß sie eine Transfereinrichtung (10) aufweist, welche die Unterstruktur (2) aufnehmen kann und längs eines Längsrandes des Tragtisches (7) verschwenkbar angeordnet ist und in zwei Teile unterteilt ist, nämlich einen Teil, der die Form (1) aufnimmt und einen diesen ersten Teil verlängernden Teil, der das Fahrgestell (9) des Mischapparates (3) in der Ruhestellung des letzteren aufnimmt, und an seinen Enden mit Endschaltern (11) versehen ist, durch welche der Motor (12) gesteuert wird, der zum Verschieben des Fahrgestelles (9) dient, und daß die Form (1) durch eine Ausnehmung des entsprechenden Teiles des Tragtisches (7) und durch einen entfernbaren Film gebildet ist, welcher den Boden dieser Ausnehmung bedeckt, aus Polyäthylen hergestellt ist und eine Oberflächenkonturierung aufweist.

5. Vorrichtung nach Anspruch 4, dadurch gekennzeichnet, daß die Transfereinrichtung (10) über Arme (17) schwenkbar mit Armen (16) des Tragtisches (7) verbunden ist und einen starren Rahmen hat, der in regelmäßigen Abständen Versteifungstraversen (19) sowie Montageelemente zum Halten der Unterstruktur (2) aufweist, daß das Verschwenken der Transfereinrichtung (10) zum Bewegen der Unterstruktur (2) auf den Tragtisch (7) unter Verwendung einer Schwenkeinrichtung erfolgt, die zwei Arbeitszylinder aufweist, die auf die Travensen (19) der Transfereinrichtung arbeiten und an den Füssen des Tragtisches (7) abgestützt sind und jeweils einen ersten Arbeitszylinder (20) aufweisen, dessen Kolbenstange verschwenkbar an der entsprechenden Traverse (19) angebracht ist und dessen Deckel verschwenkbar auf einem Gleitstück (21) angebracht ist, welches in horizontaler Richtung verschiebbar in Schienen (22) geführt ist, die fest mit dem entsprechenden Fuß des Tisches (7) verbunden sind, sowie einen zweiten Arbeitszylinder (23) umfaßt, dessen Kolbenstange auf das Gleitstück (21) arbeitet und dessen Deckel fest mit dem Rahmen des Tragtisches (7) verbunden ist, und daß das Stehen der Transfereinrichtung in horizontaler Ausrichtung über dem Tragtisch (7) vorzugsweise festgestellt wird unter Verwendung von Endschalter, die fest mit dem Tragtisch (7) verbunden sind und das Verriegeln der Arbeitszylinder (20) steuern.
